# EUROPÄISCHE PATENTANMELDUNG

(11) **EP 3 511 765 A1**
(43) Veröffentlichungstag der Anmeldung: **17.07.2019**
(21) Anmeldenummer: 19020005.5
(22) Anmeldetag: 06.01.2019
(51) Int. Cl.: G02C 5/12, G02C 1/06

(54) **WECHSELBARE NASENAUFLAGE**

(30) Priorität: 12.01.2018 DE 202018000175 U
(71) Anmelder: Rodenstock GmbH, 80687 München (DE)
(72) Erfinder: Knoblach, Wolfgang, 81549 München (DE)
(74) Vertreter: Kütterer, Sandra Kerstin

(57) **Zusammenfassung**

Die folgende Erfindung betrifft eine Brillenfassung mit einer auswechselbaren Nasenauflage (1), wobei die Nasenauflage (1) zwischen einem Glashaltemittel (2) und einem Brillenglas (3) angeordnet ist und die Nasenauflage (1) durch ein Einsetzen des Brillenglases (3) in das Glashaltemittel (2) fixierbar ist.

## Beschreibung

Die folgende Erfindung betrifft eine Brillenfassung mit einer auswechselbaren Nasenauflage, wobei die Nasenauflage zwischen einem Glashaltemittel und einem Brillenglas angeordnet ist und die Nasenauflage durch ein Einsetzen des Brillenglases in das Glashaltemittel fixierbar ist.

Beim Tragen von Brillen kann es zu Problem kommen, wenn die Brille auf der Nase verrutscht oder unangenehm auf die Nase drückt, insbesondere bei körperlicher Betätigung. Um einen möglichst ergonomischen Sitz der Brille auf unterschiedlichen Nasenformen zu erreichen, werden Nasenauflagen verwendet, die das Tragen einer Brille angenehmer machen sollen und ein sanftes Aufliegen der Brille auf der Nase erreichen. Die Nasenauflagen sind in der Regel mit der Brillenfassung verankert. Um auf die unterschiedlichen Bedürfnisse der Brillenträger einzugehen, ist es möglich, die Nasenauflagen auszuwechseln, um diese zum Beispiel gegen weichere Nasenauflagen auszutauschen. Insbesondere Nasenauflagen aus Silikon sind dazu geeignet, den Auflage-Druck zu reduzieren, um den Tragekomfort zu erhöhen.

Aus dem Stand der Technik sind verschiedene Lösungsvorschläge für die Ausgestaltung von Nasenauflagen bei Brillen.

So beschreibt die DE19848316A1 eine Brille bzw. Sichtscheibe mit einem Nasensteg bzw. einer Nasenbrücke, die in sich eine geschlossene Einheit bildet und konvexseitig annähernd der Kontur des Nasenausschnitts der Scheibe entlang führt und weiter über zwei Ausnehmungen der Scheibe konkavseitig verlaufend zunächst zwei brückenartige Erhöhungen bildet, der zur Verbindung der Nasenbrücke führt. Eine in sich geschlossene Schlaufe führt annähernd der Kontur des Nasenausschnitts entlang, die an ihrem höchsten Punkt auf der Scheibe aufliegt.

Die DE3522675A1 offenbart eine zum Tragen der Brille dienendes Nasenauflage-Kissen oder Pad aus gummielastischem Material zum Einsetzen in eine am Brillengestell befestigten Ring- oder Rahmenvorrichtung, wobei der Körper des Kissens aus mindestens drei Form- und Funktionsteilen besteht, so dass unter Zusammendrücken eines Teils des Pads in die Ring- oder Rahmenvorrichtung einsetzbar ist.

Im Stand der Technik sind Lösungen bekannt, die eine gewisse Anpassung von Nasenpads bei einer Brille ermöglichen.

In der DE102006055337.3 wird eine Brillenfassung mit einer Nasenauflage beschrieben, wobei die Nasenauflage derart angeordnet und ausgelegt ist, dass ihre Stellung relativ zu Glashaltemitteln veränderbar ist. Die Änderung der Stellung der Nasenauflage relativ zu den Glashaltemitteln ist zumindest entsprechend einer ersten Gebrauchsposition oder einer zweiten Gebrauchsposition wechselbar einstellbar ist. Eine solche Brillenfassung erlaubt aber keine beliebige Anpassung der Nasenauflage insbesondere kein Austausch für unterschiedliche Nasenauflage-Typen.

Es ist daher eine weitere Aufgabe, eine Brille mit einer wechselbaren Nasenauflage bereitzustellen, bei der die Nasenauflage beliebig ausgetauscht werden kann und den unterschiedlichen Bedürfnissen verschiedener Brillenträger gerecht zu werden.

Gelöst wird diese Aufgabe durch eine Vorrichtung nach Patentanspruch 1.

Mit der vorliegenden Erfindung wird eine Brillenfassung mit einer auswechselbaren Nasenauflage vorgeschlagen, wobei die Nasenauflage zwischen einem Glashaltemittel und einem Brillenglas angeordnet ist und die Nasenauflage durch ein Einsetzen des Brillenglases in das Glashaltemittel fixierbar ist.

Die erfindungsgemäße Brillenfassung ermöglicht ein einfaches Auswechseln der Nasenauflage, so dass Nasenauflagen unterschiedlicher Größe sowie angepasst auf unterschiedliche Nasenweiten verwendet werden können. Zudem ist es möglich, Nasenauflagen unterschiedlicher Größe schnell auszutauschen und auf die Bedürfnisse des Brillenträgers anzupassen. Darüber hinaus können Nasenauflagen unterschiedlicher Farben eingesetzt werden, um farbige Akzente zu setzen. Für den asiatischen Markt können ebenfalls die asiatischen Nasenauflagen eingesetzt werden.

Unter einem Glashaltemittel im Sinne der vorliegenden Erfindung wird eine Brillenglasfassung verstanden, in die ein Brillenglas eingesetzt werden kann. Zwischen dem Glashaltemittel und dem Brillenglas können unterschiedliche Nasenauflagen eingesetzt werden und durch das eingesetzte Glas fixiert werden. Es kann ebenfalls ein gewöhnlicher Träger für Metallstegstützen eingesetzt werden, in den handelsübliche einklickbare Nasenauflagen gesetzt werden können.

In einer vorteilhaften Ausgestaltung der vorliegenden Erfindung ist die Nasenauflage zwischen dem Glashaltemittel und dem Brillenglas in einer Ausfräsung auf einer beim Tragen der Brillenfassung gesichtszugewandten Seite des Glashaltemittels fixierbar.

Durch die Ausfräsung im Glashaltemittel kann die Nasenauflage präzise eingesetzt werden und durch das Einsetzen des Brillenglases fixiert werden.

In einer weiteren bevorzugten Ausgestaltungsform ist die Ausfräsung auf der gesichtszugewandten Seite des Glashaltemittels derart ausgestaltet, dass die Nasenauflage passgenau in diese Ausfräsung greift und durch das Brillenglas in der Brillenfassung fixierbar ist.

Dies ermöglicht einen festen Sitz der Nasenauflage, sobald diese durch das Brillenglas fixiert wurde.

In einer alternativen Ausgestaltungsform weist die Brillenfassung eine weitere Ausfräsung auf, wobei die Nasenauflage die weitere Ausfräsung aufweist, in welche das Brillenglas beim Einsetzen greift und dadurch die Fixierung der Nasenauflage ermöglicht.

Somit kann das Brillenglas in die Nasenauflage greifen und diese fest fixieren, damit diese nicht verrutscht. Nach dem Einsetzten des Brillenglases kann die Nasenauflage dann nicht mehr verrutschen.

Bei einer weiteren Ausgestaltung der vorliegenden Erfindung weist die Nasenauflage ein Nasenpolster und einen Halter auf, wobei das Nasenpolster an dem Halter befestigt ist, und wobei der Halter zwischen dem Glashaltemittel und dem Brillenglas fixierbar ist.

Ebenfalls Gegenstand der vorliegenden Erfindung ist eine Brille mit einer Brillenfassung mit einer erfindungsgemäßen auswechselbaren Nasenauflage aufweisend zwei Brillengläser, wobei der Facettenschliff der Brillengläser, beim Einsetzen der Brillengläser, passgenau in die Ausfräsung der Nasenauflage greift. Die Nasenauflage wird von der Glasnutseite aus eingesetzt und durch das Einsetzten der Brillengläser fixiert.

In einer alternativen Ausgestaltungsform ist ein Befestigungsteil der Nasenauflage derart ausgestaltet, dass das Befestigungsteil an einer Traverse des Glashaltemittels einrastbar ist und mittels der Facette des Brillenglases in der Brillenfassung fixierbar ist.

Bei dieser alternativen Ausgestaltungsform wird die Nasenauflage durch einen Schlitz von der Rückseite des Randes eingeschoben. Dabei ist der Befestigungsteil an der Nasenauflage so gestaltet, dass er an der Traverse am Rand einrastet und durch die Facette des Brillenglases zusätzlich gesichert wird. Dadurch wird die Nasenauflage noch fester gesichert, damit diese nicht herausrutschen kann.

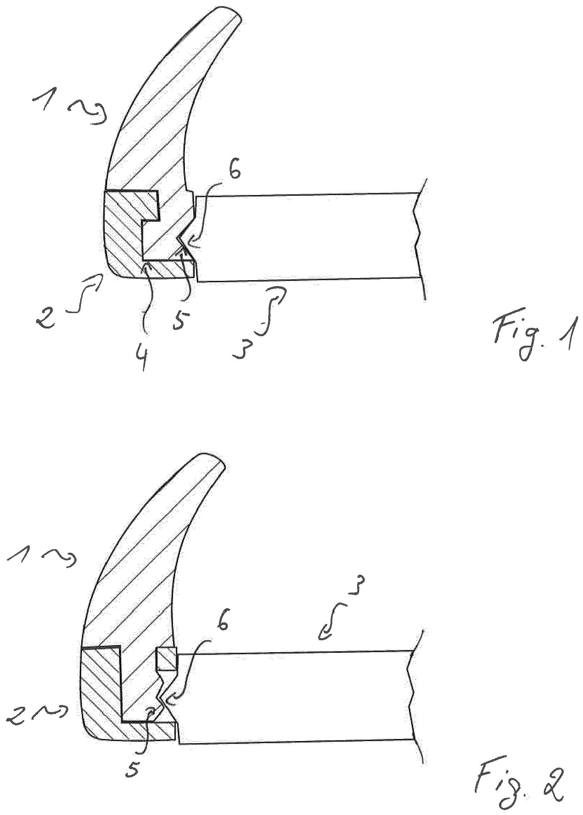

Zwei mögliche Ausgestaltungsformen der Erfindung sind in den Figuren 1 und 2 exemplarisch dargestellt.

Die Erfindung wird nachfolgend eingehender an Hand der Figuren erläutert werden. In diesen zeigen:
Fig. 1 eine schematische Darstellung einer vorgeschlagenen Brille beziehungsweise Brillenglasfassung mit Nasenauflage gemäß einer exemplarischen Ausgestaltung der Erfindung; und
Fig. 2 eine schematische Darstellung einer weiteren vorgeschlagenen Brille beziehungsweise Brillenglasfassung mit Nasenauflage gemäß einer exemplarischen Ausgestaltung der Erfindung.

Fig. 1 zeigt eine schematische Darstellung einer vorgeschlagenen Brille beziehungsweise Brillenglasfassung mit Nasenauflage gemäß einer exemplarischen Ausgestaltung der Erfindung.

Dabei zeigt Fig. 1 eine schematische Darstellung eines Teiles einer Brillenglasfassung in einer Draufsicht Perspektive. Die in Fig.1 teilweise dargestellte Brillenglasfassung weist ein Glashaltemittel 2, eine Nasenauflage 1 und ein Brillenglas 3 auf, welches der Übersichtlichkeitshalber nicht vollständig dargestellt ist. Dabei ist die Nasenauflage 1 auswechselbar.

Die Nasenauflage ist 1 zwischen dem Glashaltemittel 2 und dem Brillenglas 3 angeordnet. Dabei wird die Nasenauflage 1 durch ein Einsetzen des Brillenglases 3 in das Glashaltemittel 2 fixiert gehalten.

In dem Beispiel der Fig. 1 ist die Nasenauflage 1 zwischen dem Glashaltemittel 2 und dem Brillenglas 3 in einer Ausfräsung 4 auf einer beim Tragen der Brillenfassung gesichtszugewandten Seite des Glashaltemittels 2 fixierbar. Ferner ist die Ausfräsung 4 auf der gesichtszugewandten Seite des Glashaltemittels 2 derart ausgestaltet ist, dass die Nasenauflage 1 passgenau in die Ausfräsung 4 greift und durch das Brillenglas 3 in der Brillenfassung fixiert gehalten wird. Die Brillenfassung weist eine weitere Ausfräsung 5 auf. Im Beispiel der Fig. 1 weist dabei die Nasenauflage 1 die weitere Ausfräsung 5 auf. In diese greift das Brillenglas 3 beim Einsetzen und ermöglicht dadurch die Fixierung der Nasenauflage 1. Im Beispiel der Fig. 1 weist das Brillenglas 3 einen Facettenschliff 6 auf. Mittels diesem greift das Brillenglas 3 in die weitere Ausfräsung 5 und wird somit in der Brillenfassung fixiert gehalten.

Fig. 2 zeigt eine schematische Darstellung einer weiteren vorgeschlagenen Brille beziehungsweise Brillenglasfassung mit Nasenauflage gemäß einer exemplarischen Ausgestaltung der Erfindung.

Dabei zeigt Fig. 2 eine schematische Darstellung eines Teiles einer Brillenglasfassung in einer Draufsicht Perspektive, die jener der in Fig. 1 gewählten entspricht.

Die Nasenauflage 1 weist ein Nasenpolster und einen Halter auf, wobei das Nasenpolster an dem Halter befestigt ist, und wobei der Halter zwischen dem Glashaltemittel 2 und dem Brillenglas 3 fixierbar ist. Ein Facettenschliff 6 des Brillenglases 3 greift beim Einsetzen des Brillenglases 3 in die Brillenfassung, passgenau in die weitere Ausfräsung 5 der Nasenauflage 1. In Fig. 2 ist das Befestigungsteil der Nasenauflage 1 derart ausgestaltet, dass das Befestigungsteil an einer Traverse des Glashaltemittels 2 einrastbar ist und mittels der Facette 6 des Brillenglases 3 in der Brillenfassung fixierbar ist.

### Bezugszeichen

- 1: Nasenauflage
- 2: Glashaltemittel
- 3: Brillenglas
- 4: Ausfräsung
- 5: weitere Ausfräsung
- 6: Facette

## Patentansprüche

1. Brillenfassung mit einer auswechselbaren Nasenauflage (1),
**dadurch gekennzeichnet, dass** die Nasenauflage (1) zwischen einem Glashaltemittel (2) und einem Brillenglas (3) angeordnet ist und die Nasenauflage (1) durch ein Einsetzen des Brillenglases (3) in das Glashaltemittel (2) fixierbar ist.

2. Brillenfassung nach Anspruch 1, wobei
die Nasenauflage (1) zwischen dem Glashaltemittel (2) und dem Brillenglas (3) in einer Ausfräsung (4) auf einer beim Tragen der Brillenfassung gesichtszugewandten Seite des Glashaltemittels (2) fixierbar ist.

3. Brillenfassung nach Anspruch 2, wobei
die Ausfräsung (4) auf der gesichtszugewandten Seite des Glashaltemittels (2) derart ausgestaltet ist, dass die Nasenauflage (1) passgenau in die Ausfräsung (4) greift und durch das Brillenglas (3) in der Brillenfassung fixierbar ist.

4. Brillenfassung nach einem der vorherigen Ansprüche 2 oder 3, aufweisend
eine weitere Ausfräsung (5), wobei die Nasenauflage (1) die weitere Ausfräsung (5) aufweist, in welche das Brillenglas (3) beim Einsetzen greift und dadurch die Fixierung der Nasenauflage (1) ermöglicht.

5. Brillenfassung nach einem der vorherigen Ansprüche, wobei
die Nasenauflage (1) ein Nasenpolster und einen Halter aufweist, wobei das Nasenpolster an dem Halter befestigt ist, und wobei der Halter zwischen dem Glashaltemittel (2) und dem Brillenglas (3) fixierbar ist.

6. Brille mit einer Brillenfassung mit einer auswechselbaren Nasenauflage (1) gemäß einem der vorherigen Ansprüche, aufweisend zwei Brillengläser (3),
**dadurch gekennzeichnet, dass** ein Facettenschliff (6) der Brillengläser (3), beim Einsetzen der Brillengläser (3), passgenau in die weitere Ausfräsung (5) der Nasenauflage (1) greift.

7. Brille nach Anspruch 6,
**dadurch gekennzeichnet, dass** ein Befestigungsteil der Nasenauflage (1) derart ausgestaltet ist, dass das Befestigungsteil an einer Traverse des Glashaltemittels (2) einrastbar ist und mittels der Facette (6) des Brillenglases (3) in der Brillenfassung fixierbar ist.
